# EUROPEAN PATENT SPECIFICATION

(11) **EP 0 880 403 B1**
(45) Date of publication and mention of the grant of the patent: **23.07.2003**
(21) Application number: 97902793.5
(22) Date of filing: 30.01.1997
(51) Int. Cl.: B01F 17/44, A23K 1/02

(54) **STABLE, LOW-VISCOSITY FEEDSTUFF DISPERSION OF MOLASSES AND A FAT OR AN OIL OR AN ACID FROM FAT OR OIL OR A MIXTURE THEREOF**
STABILE, NIEDRIGVISKOSE FUTTERMITTELDISPERSION AUS MOLASSE UND FETT ODER OL ODER FETT- ODER OLSAURE ODER EINEM GEMISCH DARAUS
CHARGE D'ALIMENTATION STABLE, A FAIBLE VISCOSITE, CONSTITUEE D'UNE DISPERSION DE MOLASSES ET D'UNE GRAISSE, D'UNE HUILE OU D'UN ACIDE ISSU D'UNE TELLE GRAISSE OU D'UNE TELLE HUILE OU D'UN MELANGE DE CES SUBSTANCES

(30) Priority: 06.02.1996 SE 9600423
(43) Date of publication of application: 02.12.1998
(73) Proprietor: AKZO NOBEL N.V., 6800 SB Arnhem (NL)
(72) Inventor: SELSE, Dennis, S-471 61 Myggenäs (SE)
(74) Representative: Andersson, Rolf
(86) International application number: SE9700142
(87) International publication number: WO97028896

(56) References cited:
- AU-B- 476 166
- US-A- 3 895 117
- PATENT ABSTRACTS OF JAPAN, Vol. 7, No. 151, C-174; & JP,A,58 063 353 (NIHON KAGAKU SHIRIYOU K.K.), 15 April 1983.

## Description

The present invention relates to a stable, aqueous and low-viscosity feedstuff dispersion of molasses and a fat, an oil or an acid from fat or oil or a mixture thereof. The dispersant used in the inventive dispersion is a nonionic ethoxylate which has a molecular weight of 1,500-15,000 and contains at least one aliphatic hydrocarbon group having 12-24 carbon atoms and which comprises at least 75% by weight of ethyleneoxy groups.

It is well-known to use molasses mixed with a hydrophobic compound like fats, oils, acids from fat or oil or mixtures thereof as supplementary feedstuff. In order to prevent a phase separation between a fat, an oil or an acid from fat or oil, or a mixture thereof and the molasses, one usually adds a dispersant intended to disperse the fat, the oil or the acid from fat or oil, or the mixture thereof in the aqueous phase of the molasses.

Thus, US Patent Specification 3,895,117 teaches the preparation of a liquid, aqueous and stable dispersion of solid fat and molasses, which contains approximately 15% by weight of fat. In the process of preparation, one first melts the fat and admixes a surfactant in an amount of 0.01-0.5% by weight of the melted fat, and then adds molasses and water to this mixture in order to obtain a liquid dispersion. As surfactant, use is made of a nonionic compound, such as polyoxyethyl(20)sorbitan mono-oleate, polyethylene glycol(400)mono-oleate or polyethylene glycol(400)sesquioleate. With this process, it is possible to obtain homogeneous dispersions of low viscosity. However, these dispersions do not remain stable when stored for some time, and the US specification therefore suggests that also polymeric stabilising agents be added to the dispersions. In addition, it has been found that the viscosity increases notably when the dispersions are stored, which obstructs or precludes expedient handling of the dispersions. Accordingly, the present invention aims at improving the storage stability of dispersion of a fat, an oil or an acid from fat or oil or a mixture thereof in molasses, as well as preventing or reducing the increase in viscosity occurring when the dispersions are stored.

According to the present invention, it has now surprisingly been found that the above-mentioned drawbacks can be obviated by the addition of a nonionic ethoxylate which has a molecular weight of 1,500-15,000, preferably 2,500-12,000, and contains at least one aliphatic hydrocarbon group having 12-24 carbon atoms and which comprises at least 75% by weight, preferably at least 85% by weight, of ethyleneoxy groups.

In accordance with the invention, the nonionic ethoxylate is usually added in an amount of 0.5-5%, preferably 0.8-4%, based on the weight of a fat, an oil or an acid from fat or oil or a mixture thereof. By using the ethoxylate as dispersant in the production of conventional dispersions of molasses and a fat, an oil or an acid from fat or oil or a mixture thereof, one obtains a dispersion having a manageable viscosity also after a long period of storage. That this is so is highly surprising, since one would expect the inventive dispersant, which is more hydrophilic than the dispersants of US Patent Specification 3,895,117, to be unsuited for use as dispersant for a fat, an oil or an acid from fat or oil or a mixture thereof, thus yielding high-viscosity dispersions of poor homogeneity and stability.

A dispersion according to the invention usually contains 5-35% by weight, preferably 10-25% by weight, of the fat, the oil or the acid from fat or oil or the mixture thereof. The amount of molasses, calculated as free from water, may be 40-80% by weight, preferably 48-68% by weight, while the total amount of water may be 13-38% by weight, preferably 18-32% by weight, based on the weight of the dispersion.

Molasses not only is a source of carbohydrates, but also contains a number of nutritious substances suitably included in animal feedstuff. In inventive applications, use may basically be made of all kinds of molasses that are commercially available. Usually, molasses is available as an aqueous solution containing a predominant amount of sugar, as well as minor amounts of other organic or inorganic compounds. The water content of molasses may vary, depending on the degree of processing. Normally, the water content is 15-40% by weight, preferably 20-30% by weight. Examples of suitable molasses are cane-sugar molasses, beet molasses, wood-sugar molasses and citrous molasses.

The fats, oils or acids from fat or oil or mixtures thereof constituting the hydrophobic phase of the dispersion according to the invention are suitably of vegetable or animal origin. Examples of such suitable hydrophobic edible products are mono-, di- or triglycerides of different fatty acids, such as lauric acid, stearic acid, palmitic acid, oleic acid, ricinoleic acid, and linolenic acid as well as the fatty acids themselves. Other serviceable fats and oils are phospatides, such as lecithin and kephalin. Usually, fats, oils and acids are identified by an indication of their source of origin, and products suitably used in a dispersion according to the invention are soybean oil, cotton oil, maize oil, rape oil, olive oil, coconut oil, palm oil, renderer, lard, tallow, and fish oil.

Conveniently, the ethoxylate according to the invention is based on a compound of natural origin, to which has been added the desired amount of ethylene oxide. Examples of such compounds of natural origin are oleic acid, ricinoleic acid, tallow fatty acid, rape fatty acid, linoleic acid, glycerides based on tallow fatty acids, oleic acid, ricinoleic acid, soybean fatty acids, rape fatty acids and mono-, di- or triesters of sorbitan and such fatty acids. Further examples are alcohols obtained by the hydration of natural fatty acids.

According to the invention, suitable ethoxylates are ethylene oxide adducts of a monofunctional carboxylic acid or alcohol having 12-24 carbon atoms, the adduct having a molecular weight of 2,500-8,000. Preferably, the fatty acids and the alcohols are derived from edible fats or oils. Examples of such compounds are ethoxylates based on oleic acid, linolenic acid, stearic acid and palmitic acid, as well as the corresponding alcohols. Other suitable ethoxylates are ethylene oxide adducts of mono-, di- or triglycerides containing at least one acyl group having 12-24 carbon atoms, the adducts having a molecular weight of 3,500-11,000. Examples of such compounds are ethylene oxide adducts containing 80-200 ethyleneoxy units and being based on mono-, di- or triglycerides that contain acyl groups from oleic acid, ricinoleic acid, linolenic acid, stearic acid and palmitic acid, as well as naturally occurring triglycerides. Castor-oil ethoxylates having a molecular weight of 7,000-11,000 are especially preferred. Another suitable ethoxylate is an ethylene oxide adduct of a mono-, di- or triester of sorbitan and a carboxylic acid having 12-24 carbon atoms, the ethoxylate having a molecular weight of 4,000-11,000. Examples of such compounds are mono-, di- or triesters of sorbitan and oleic acid, linolenic acid, stearic acid and palmitic acid, or a mixture of fatty acids with acyl groups having an average number of carbon atoms of 15-20, 80-200 ethyleneoxy units having been added to these esters.

Apart from the fat, the oil or the acid from fat or oil, or the mixture thereof, molasses, water and dispersant, the inventive dispersion may contain a number of supplementary additives, such as salts, e.g. ammonium sulphate, sodium chloride and potassium chloride, vitamins, minerals, preservatives and antioxydants. Other possible additives are nutritious substances containing proteins, phosphorus compounds, urea or diammonium phosphate.

The dispersion according to the invention can be produced by admixing the liquid dispersant to a liquid and an edible fat, oil or acid from fat or oil, or a mixture thereof. If the fat, the oil or the acid from fat or oil, or the mixture thereof employed is solid, it is first melted and conveniently maintained at the melting temperature while the dispersant is admixed. Then, the molasses and the additional water, if any, may be added in optional order. If a high viscosity is obtained, e.g. as a result of a high content of the fat, the oil or the acid from fat or oil, or the mixture thereof, an additional amount of water may suitably be added. Conveniently, the supplementary additives are added after the dispersant has been mixed with the fat, the oil or the acid from fat or oil, or the mixture thereof, if the dispersant is insoluble in water. Otherwise, it may advantageously be added along with the molasses or the water.

### Example 1

Under vigorous agitation, the fat and the dispersant were mixed in liquid state and in the amounts indicated in the Table below. Thereafter, the molasses and the water were added, and the resulting mixture was thoroughly agitated until a homogeneous dispersion had been obtained. The viscosity of the resulting feedstuff dispersion was measured after 1 day as well as 19 days. In addition, the storage stability was measured in a climatic chamber at a temperature of 21°C and an air humidity of 60%. The following results were obtained.

| Tests | 1 | 2 | 3 | 4 | 5 | 6 | 7 |
|---|---|---|---|---|---|---|---|
| **Ingredients,** **% by weight** | | | | | | | |
| RO-200¹⁾ | 0.15 | 0.45 | 0.3 | - | - | 0.15 | - |
| RO-160²⁾ | - | - | - | - | 0.3 | - | - |
| PEG 4000³⁾ | - | - | - | 0.3 | - | - | - |
| PEG 400 MO⁴⁾ | - | - | - | - | - | - | 0.3 |
| Molasses⁵⁾ | 60.5 | 60.5 | 58.5 | 58.5 | 58.5 | 58.5 | 58.5 |
| Fat A⁶⁾ | 14.9 | 14.6 | 14.7 | 14.7 | 14.7 | - | 14.7 |
| Lard | - | - | - | - | - | 14.9 | - |
| Water | bal. | bal. | bal. | bal. | bal. | bal. | bal. |

| **Viscosity, cP** | | | | | | | |
|---|---|---|---|---|---|---|---|
| 1 day | 3,790 | 4,430 | 2,060 | -ⁿ⁾ | 2,055 | 1,955 | 5,380 |
| 19 days | 9,150 | 19,000 | 20,000 | - | 19,700 | 2,760 | 200,000 |

| **Appearance** | | | | | | | |
|---|---|---|---|---|---|---|---|
| 1 day | even | even | even | - | even | even | even |
| 19 days | even | even | even | - | even | even | even |

| | | | | | | | |
|---|---|---|---|---|---|---|---|
| ¹⁾ ricinoleate ethoxylated with 200 mole of ethylene oxide | | | | | | | |
| ²⁾ ricinoleate ethoxylated with 160 mole of ethylene oxide | | | | | | | |
| ³⁾ polyethylene glycol having a molecular weight of 4,000 | | | | | | | |
| ⁴⁾ mono-oleate of a polyethylene glycol having a molecular weight of 400 | | | | | | | |
| ⁵⁾ molasses, calculated as free from water | | | | | | | |
| ⁶⁾ animal fat having a melting point of approximately 35°C | | | | | | | |
| ⁿ⁾ no homogeneous dispersion was obtained. | | | | | | | |

It is evident from these results that the compositions according to the invention had a much lower viscosity than the comparative compositions of tests 4 and 7 after 19 days' storage.

### Example 2

Dispersions of fat and molasses were produced as in Example 1 and as indicated in the Table below. After 25 days, the viscosity of the dispersions was measured.

| Tests | 1 | 2 | 3 | 4 |
|---|---|---|---|---|
| **Ingredients, %** **by weight** | | | | |
| RO-200 | 0.45 | - | 0.45 | - |
| PMO-20¹⁾ | - | 0.45 | - | 0.45 |
| Lard | 14.6 | 14.6 | - | - |
| Renderer | | | 14.6 | 14.6 |
| Molasses | 59.5 | 59.5 | 59.5 | 59.5 |
| water | bal. | bal. | bal. | bal. |

| **Viscosity, cP 25 days** | 12,000 | >100,000 | 5,100 | >100,000 |
|---|---|---|---|---|
| | | | | |

| | | | | |
|---|---|---|---|---|
| ¹⁾ Monooleate ester of sorbitan ethoxylated with 20 mole of ethylene oxide. | | | | |

It is evident from these results that dispersions 1 and 3 according to the invention exhibited a much lower viscosity than did comparative dispersions 2 and 4 after 25 days' storage.

### Example 3

**Test 1.** Renderer and the dispersant, RO-200, were mixed in liquid state under vigorous agitation in the amount indicated in the table below. Thereafter, aqueous molasses and water were added, and the resulting mixture was thoroughly agitated until a homogeneous dispersion was obtained.

**Test 2.** The dispersant (RO-200), 1,2-propandiol and water were mixed. Aqueous molasses was added and the resulting mixture was well blended followed by the addition of renderer in liquid state under vigorous agitation until a homogeneous dispersion was obtained.

**Test 3**. The dispersant (RO-200) and water and aqueous molasses were mixed, whereafter renderer in liquid state was added under vigorous agitation until a homogeneous dispersion was obtained.

The resulting molasses mixtures were then stored in a climatic chamber at a temperature of 21°C and an air humidity of 60%. The homogenity of the mixtures were visually evaluated while their viscosities were measured after 11 and 43 days. The following results were obtained.

| Tests | 1 | 2 | 3 |
|---|---|---|---|
| **Ingredients,** **% by weight** | | | |
| RO-200 | 0.3 | 0.3 | 0.3 |
| 1,2-propandiol | - | 0.6 | - |
| Water | - | 0.3 | 0.9 |
| Aqueous molasses (dry content 68.5%) | 84.7 | 83.8 | 83.8 |
| Renderer | 15 | 15 | 15 |

| **Viscosity, cP at 22°C** | | | |
|---|---|---|---|
| 11 days | 3 800 | 3 400 | 3 800 |
| 43 days | 6 100 | 5 800 | 5 900 |

| **Appearance** | | | |
|---|---|---|---|
| 11 days | even | even | even |
| 43 days | even | even | even |

It is evident that all three preparation processes resulted in molasses dispersions of low viscosity.

## Claims

1. A dispersion of a fat, an oil or an acid from fat or oil or a mixture thereof in aqueous molasses, **characterised in that** it contains, as dispersant, an nonionic ethoxylate which has a molecular weight of 1,500-15,000, preferably 2,500-12,000, and contains at least one aliphatic hydrocarbon group having 12-24 carbon atoms and which comprises at least 75% by weight, preferably at least 85% by weight, of ethyleneoxy groups.

2. A dispersion as claimed in claim 1, **characterised in that** the ethoxylate consists of
a) an ethylene oxide adduct of a monofunctional carboxylic acid or alcohol having 12-24 carbon atoms, the adduct having a molecular weight of 2,500-8,000,
b) an ethylene oxide adduct of mono-, di- or triglyceride, which contains at least one acyl group having 12-24 carbon atoms, the adduct having a molecular weight of 3,500-11,000, or
c) an ethylene oxide adduct of a mono-, di- or triester of sorbitan and a carboxylic acid having 12-24 carbon atoms, the ethoxylate having a molecular weight of 4,000-11,000.

3. A dispersion as claimed in claim 2, **characterised in that** the dispersant is a castor-oil ethoxylate having a molecular weight of 7,000-11,000.

4. A dispersion as claimed in any one of claims 1-3, **characterised in that** it contains
5-35% by weight of the fat, the oil or the acid from fat or oil or the mixture thereof,
40-80% by weight of molasses, which is free from water,
13-38% by weight of water, and
0.5-5% by weight of dispersant, based on the total amount of the fat, the oil or the acid from fat or oil or the mixture thereof.

5. A method for producing a dispersion of a fat, an oil or an acid from fat or oil or a mixture thereof in aqueous molasses, **characterised in that** the dispersion is prepared by the addition of a dispersant containing a nonionic ethoxylate which has a molecular weight of 1,500-15,000, preferably 2,500-12,000, and contains at least one aliphatic hydrocarbon group having 12-24 carbon atoms and which comprises at least 75% by weight, preferably at least 85% by weight, of ethyleneoxy groups, in an amount of 0.5-5% by weight based on the amount of oil and fat.

6. The use of a nonionic ethoxylate which has a molecular weight of 1,500-15,000, preferably 2,500-12,000, and contains at least one aliphatic hydrocarbon group having 12-24 carbon atoms and which comprises at least 75% by weight, preferably at least 85% by weight, of ethyleneoxy groups, as dispersant in the production of a dispersion of a fat, an oil or an acid from fat or oil or a mixture thereof in aqueous molasses.

7. The use as claimed in claim 6, **characterised in that** the dispersant consists of
a) an ethylene oxide adduct of a monofunctional carboxylic acid or alcohol having 12-24 carbon atoms, the adduct having a molecular weight of 2,500-8,000,
b) an ethylene oxide adduct of mono-, di- or triglyceride, which contains at least one acyl group having 12-24 carbon atoms, the adduct having a molecular weight of 3,500-11,000, or
c) an ethylene oxide adduct of a mono-, di- or triester of sorbitan and a carboxylic acid having 12-24 carbon atoms, the ethoxylate having a molecular weight of 4,000-11,000.

8. The use as claimed in claim 7, **characterised in that** the dispersant is a castor-oil ethoxylate having a molecular weight of 7,000-11,000.

## Patentansprüche

1. Dispersion von einem Fett, einem Öl oder einer Säure von einem Fett oder einem Öl oder einer Mischung davon in wässriger Melasse, **dadurch gekennzeichnet, dass** sie als Dispergiermittel ein nicht-ionisches Ethoxylat enthält, welches ein Molekulargewicht von 1.500 bis 15.000, vorzugsweise 2.500 bis 12.000, aufweist und mindestens eine aliphatische Kohlenwasserstoffgruppe mit 12 bis 24 Kohlenstoffatomen enthält und mindestens 75 Gew.-%, bevorzugt mindestens 85 Gew.-%, Ethylenoxygruppen umfasst.

2. Dispersion wie in Anspruch 1 beansprucht, **dadurch gekennzeichnet, dass** das Ethoxylat aus
a) einem Ethylenoxidaddukt von einer monofunktionellen Carbonsäure oder einem monofunktionellen Alkohol mit 12 bis 24 Kohlenstoffatomen, wobei das Addukt ein Molekulargewicht von 2.500 bis 8.000 aufweist,
b) einem Ethylenoxidaddukt von Mono-, Di- oder Triglycerid, welches mindestens eine Acylgruppe mit 12 bis 24 Kohlenstoffatomen enthält, wobei das Addukt ein Molekulargewicht von 3.500 bis 11.000 aufweist, oder
c) einem Ethylenoxidaddukt von einem Mono-, Di- oder Triester von Sorbitan und einer Carbonsäure mit 12 bis 24 Kohlenstoffatomen, wobei das Ethoxylat ein Molekulargewicht von 4.000 bis 11.000 aufweist,
besteht.

3. Dispersion wie in Anspruch 2 beansprucht, **dadurch gekennzeichnet, dass** das Dispergiermittel ein Castorölethoxylat mit einem Molekulargewicht von 7.000 bis 11.000 ist.

4. Dispersion wie in irgendeinem der Ansprüche 1 bis 3 beansprucht, **dadurch gekennzeichnet, dass** sie enthält
5 bis 35 Gew.-% des Fetts, des Öls oder der Säure von einem Fett oder einem Öl oder der Mischung davon,
40 bis 80 Gew.-% Melasse, welche frei von Wasser ist,
13 bis 38 Gew.-% Wasser und
0,5 bis 5 Gew.-% Dispergiermittel auf Basis der Gesamtmenge des Fetts, des Öls oder der Säure von einem Fett oder einem Öl oder der Mischung davon.

5. Verfahren zur Herstellung einer Dispersion von einem Fett, einem Öl oder einer Säure von einem Fett oder einem Öl oder einer Mischung davon in wässriger Melasse, **dadurch gekennzeichnet, dass** die Dispersion hergestellt wird durch Zugabe eines Dispergiermittels, enthaltend ein nicht-ionisches Ethoxylat, welches ein Molekulargewicht von 1.500 bis 15.000, vorzugsweise 2.500 bis 12.000 aufweist und mindestens eine aliphatische Kohlenwasserstoffgruppe mit 12 bis 24 Kohlenstoffatomen enthält und mindestens 75 Gew.-%, vorzugsweise mindestens 85 Gew.-%, Ethylenoxygruppen umfasst, in einer Menge von 0,5 bis 5 Gew.-%, bezogen auf die Menge an Öl und Fett.

6. Verwendung eines nicht-ionisches Ethoxylats, welches ein Molekulargewicht von 1.500 bis 15.000, vorzugsweise 2.500 bis 12.000, aufweist und mindestens eine aliphatische Kohlenwasserstoffgruppe mit 12 bis 24 Kohlenstoffatomen enthält und mindestens 75 Gew.-%, vorzugsweise mindestens 85 Gew.-%, Ethylenoxygruppen umfasst, als Dispergiermittel bei der Herstellung einer Dispersion von einem Fett, einem Öl oder einer Säure von einem Fett oder einem Öl oder einer Mischung davon in wässriger Melasse.

7. Verwendung wie in Anspruch 6 beansprucht, **dadurch gekennzeichnet, dass** das Dispergiermittel aus
a) einem Ethylenoxidaddukt von einer monofunktionellen Carbonsäure oder einem monofunktionellen Alkohol mit 12 bis 24 Kohlenstoffatomen, wobei das Addukt ein Molekulargewicht von 2.500 bis 8.000 aufweist,
b) einem Ethylenoxidaddukt von Mono-, Di- oder Triglycerid, welches mindestens eine Acylgruppe mit 12 bis 24 Kohlenstoffatomen enthält, wobei das Addukt ein Molekulargewicht von 3.500 bis 11.000 aufweist, oder
c) einem Ethylenoxidaddukt von einem Mono-, Di- oder Triester von Sorbitan und einer Carbonsäure mit 12 bis 24 Kohlenstoffatomen, wobei das Ethoxylat ein Molekulargewicht von 4.000 bis 11.000 aufweist,
besteht.

8. Verwendung wie in Anspruch 7 beansprucht, **dadurch gekennzeichnet, dass** das Dispergiermittel ein Castorölethoxylat mit einem Molekulargewicht von 7.000 bis 11.000 ist.

## Revendications

1. Dispersion d'une graisse, d'une huile ou d'un acide provenant d'une graisse ou d'une huile ou de leur mélange dans de la mélasse aqueuse, **caractérisée en ce qu'**elle contient, comme dispersant, un éthoxylate non ionique qui possède une masse moléculaire de 1500 - 15 000, de préférence 2500 - 12 000, et qui contient au moins un groupe hydrocarboné aliphatique ayant 12 - 24 atomes de carbone et qui comprend au moins 75 % en poids, de préférence au moins 85 % en poids, de groupes éthylèneoxy.

2. Dispersion telle que revendiquée dans la revendication 1, **caractérisée en ce que** l'éthoxylate est constitué de
a) un produit d'addition d'oxyde d'éthylène et d'un acide carboxylique ou d'un alcool monofonctionnel ayant 12 - 24 atomes de carbone, le produit d'addition ayant une masse moléculaire de 2500 - 8000,
b) un produit d'addition d'oxyde d'éthylène et d'un mono-, di- ou triglycéride, qui contient au moins un groupe acyle ayant 12 - 24 atomes de carbone, le produit d'addition ayant une masse moléculaire de 3500 - 11 000, ou
c) un produit d'addition d'oxyde d'éthylène et d'un mono-, di- ou triester de sorbitane et d'un acide carboxylique ayant 12 - 24 atomes de carbone, l'éthoxylate ayant une masse moléculaire de 4000 - 11 000.

3. Dispersion telle que revendiquée dans la revendication 2, **caractérisée en ce que** le dispersant est un éthoxylate d'huile de ricin ayant une masse moléculaire de 7000 - 11 000.

4. Dispersion telle que revendiquée dans l'une quelconque des revendications 1 - 3, **caractérisée en ce qu'**elle contient
5 - 35 % en poids de la graisse, de l'huile ou de l'acide provenant d'une graisse ou d'une huile ou de leur mélange,
40 - 80 % en poids de mélasse qui est exempte d'eau,
13 - 38 % en poids d'eau, et
0,5 - 5 % en poids d'un dispersant, rapporté à la quantité totale de la graisse, de l'huile ou de l'acide provenant d'une graisse ou d'une huile ou de leur mélange.

5. Procédé de préparation d'une dispersion d'une graisse, d'une huile ou d'un acide provenant d'une graisse ou d'une huile ou de leur mélange dans de la mélasse aqueuse, **caractérisé en ce que** la dispersion est préparée par addition d'un dispersant contenant un éthoxylate non ionique qui possède une masse moléculaire de 1500 - 15 000, de préférence 2500 - 12 000, et qui contient au moins un groupe hydrocarboné aliphatique ayant 12 - 24 atomes de carbone et qui comprend au moins 75 % en poids, de préférence au moins 85 % en poids, de groupes éthylèneoxy, en une quantité de 0,5 - 5 % en poids rapporté à la quantité d'huile et de graisse.

6. Utilisation d'un éthoxylate non ionique qui possède une masse moléculaire de 1500 - 15 000, de préférence 2500 - 12 000, et qui contient au moins un groupe hydrocarboné aliphatique ayant 12 - 24 atomes de carbone et qui comprend au moins 75 % en poids, de préférence au moins 85 % en poids, de groupes éthylèneoxy, comme dispersant dans la préparation d'une dispersion d'une graisse, d'une huile ou d'un acide provenant d'une graisse ou d'une huile ou de leur mélange dans de la mélasse aqueuse.

7. Utilisation telle que revendiquée dans la revendication 6, **caractérisée en ce que** le dispersant est constitué de
a) un produit d'addition d'oxyde d'éthylène et d'un acide carboxylique ou d'un alcool monofonctionnel ayant 12 - 24 atomes de carbone, le produit d'addition ayant une masse moléculaire de 2500 - 8000,
b) un produit d'addition d'oxyde d'éthylène et d'un mono-, di- ou triglycéride, qui contient au moins un groupe acyle ayant 12 - 24 atomes de carbone, le produit d'addition ayant une masse moléculaire de 3500 - 11 000, ou
c) un produit d'addition d'oxyde d'éthylène et d'un mono-, di- ou triester de sorbitane et d'un acide carboxylique ayant 12 - 24 atomes de carbone, l'éthoxylate ayant une masse moléculaire de 4000 - 11 000.

8. Utilisation telle que revendiquée dans la revendication 7, **caractérisée en ce que** le dispersant est un éthoxylate d'huile de ricin ayant une masse moléculaire de 7000 - 11 000.
